# EUROPÄISCHE PATENTSCHRIFT

(11) **EP 3 264 390 B1**
(45) Veröffentlichungstag und Bekanntmachung des Hinweises auf die Patenterteilung: **14.06.2023**
(21) Anmeldenummer: 17178210.5
(22) Anmeldetag: 27.06.2017
(51) Int. Cl.: G08G 1/0967, G08G 1/16

(54) **VERFAHREN ZUR SPEKTRAL-EFFIZIENTEN ERMITTLUNG VON KOLLEKTIVER UMFELD-INFORMATION FÜR DAS KOOPERATIVE UND/ODER AUTONOME FAHREN, SOWIE BERICHTENDES FAHRZEUG UND WEITERES FAHRZEUG ZUR VERWENDUNG BEI DEM VERFAHREN**
METHOD FOR SPECTRALLY-EFFICIENT DETERMINATION OF COLLECTIVE ENVIRONMENT INFORMATION FOR COOPERATIVE AND/OR AUTONOMOUS DRIVING, AND REPORTING VEHICLE AND ADDITIONAL VEHICLE INTENDED TO BE USED IN THE METHOD
PROCÉDÉ DE DÉTERMINATION EFFICACE SPECTRALE D'INFORMATIONS D'ENVIRONNEMENT COLLECTIVES POUR LA CONDUITE AUTONOME ET/OU COOPÉRATIVE, VÉHICULE RAPPORTEUR ET AUTRE VÉHICULE À UTILISER SELON LE PROCÉDÉ

(30) Priorität: 29.06.2016 DE 102016211750
(43) Veröffentlichungstag der Anmeldung: 03.01.2018
(73) Patentinhaber: VOLKSWAGEN AKTIENGESELLSCHAFT, 38440 Wolfsburg (DE)
(72) Erfinder: Alieiev, Roman, 39576 Stendal (DE); Hehn, Dr. Thorsten, 38448 Wolfsburg (DE)

(56) Entgegenhaltungen:
- WO-A1-2015/148579
- WO-A2-2006/076349
- DE-A1-102007 053 738
- US-A1- 2015 287 323
- US-B2- 6 681 157

## Beschreibung

Die Erfindung betrifft ein Verfahren zur spektral-effizienten Ermittlung von kollektiver Umfeld-Information für das kooperative und/oder autonome Fahren, bei dem ein mit Kommunikationsmodul und Umfeld-Beobachtungsmitteln ausgestattetes Fahrzeug einen Bericht über ein erkanntes nicht mit Kommunikationsmodul ausgestattetes Fahrzeug erstellt und an die weiteren sich im betreffenden Gebiet bewegenden oder befindenden Fahrzeuge sendet. Es wird darauf hingewiesen, dass der Vorschlag aufzeigt, mit welchem Verfahren die Verbreitung mit möglichst hoher spektraler Effizienz erreicht werden kann. Der Vorschlag betrifft weiterhin ein berichtendes Fahrzeug und ein weiteres Fahrzeug zur Verwendung bei dem Verfahren.

### Hintergrund der Erfindung

Für das Szenario von mit Kommunikationsmodulen ausgestatteten Fahrzeugen, die im öffentlichen Straßenverkehr direkt miteinander kommunizieren, sei es für ein kooperatives oder autonomes Fahren, ist es nötig, dass auch die nicht mit Funkkommunikation ausgestatteten Fahrzeuge Berücksichtigung finden. Techniken für die Fahrzeug-zu-Fahrzeug Direktkommunikation wurden bereits entwickelt und werden weiterentwickelt. Als Beispiel werden erwähnt die Fahrzeug-Direktkommunikation über WLAN, hier insbesondere die Variante nach dem WLAN Standard IEEE 802.11p. Bei dieser Technik werden zur Kommunikation zwischen den Fahrzeugen ad hoc WLAN Netze aufgebaut (Kommunikation im Bereich der "Ad Hoc Domain").

Fahrzeugkommunikation ist aber auch im Bereich der Mobilfunknetze möglich. Bei dieser Technik muss allerdings die Basisstation die Nachrichten von Fahrzeug zu Fahrzeug vermitteln. Das ist der Bereich, wo die Kommunikation in der sogenannten "Infrastructure Domain" stattfindet. Für die kommende Mobilfunkgeneration wird auch die Fahrzeugdirektkommunikation ermöglicht. Bei LTE heißt diese Variante LTE-V (Vehicle), bei der 5G Initiative heißt diese Variante Device-to-Device (D2D). Dies ist auch der Bereich der Fahrzeugkommunikation mit dem sich die vorliegende Erfindung beschäftigt.

Diese neueren Mobilfunkstandards weichen das zellulare Übertragungskonzept auf, um Direktkommunikation zu ermöglichen. Der in der Basisstation angesiedelte "Scheduler" hat bei dieser Form der Kommunikation weiterhin die Aufgabe der Ressourcenzuteilung, die Kommunikation zwischen Fahrzeugen erfolgt jedoch direkt, ohne den Umweg über die Basisstation in Form des sogenannter Sidelink-Datenverkehrs.

Typische Kommunikations-Szenarien sind Sicherheitsszenarien, Verkehrseffizienzszenarien und Infotainment. Für den Bereich Sicherheit werden folgende Szenarien genannt: "Cooperative Forward Collision Warning", "Pre-Crash Sensing/Warning", "Hazardous Location Warning". In diesen Bereichen tauschen die Fahrzeuge untereinander Informationen wie Position, Richtung und Geschwindigkeit aus, auch Parameter wie Größe und Gewicht. Weitere Informationen die übertragen werden betreffen Absichtsinformationen, wie "Fahrzeug beabsichtigt zu überholen", "Fahrzeug biegt links/rechts" ab, usw. die für das kooperative Fahren interessant sind. Dabei werden oft Sensordaten übermittelt. Falls eine Gefahrensituation vorliegt und der Fahrer nicht reagiert, könnte das Auto automatisch abbremsen, so dass ein Unfall verhindert wird oder zumindest die Folgen bei dem unvermeidlichen Unfall möglichst gering gehalten werden. In dem Bereich des "Platooning", hierbei handelt es sich um den Bereich des Fahrens in einer Fahrzeugkolonne, ist es geplant z.B. Information über das geplante Bremsverhalten von vorne nach hinten weiterzumelden um Auffahrunfälle zu vermeiden.

Im Bereich Verkehrseffizienz werden genannt: "Enhanced Route Guidance and Navigation", "Green-Light Optimal Speed Advisory" und "V2V Merging Assistance".

Im Bereich Infotainment steht der Internet-Zugang im Vordergrund.

Der Standard 802.11p ist eine Entwicklung speziell für die Kommunikation zwischen Fahrzeugen untereinander und der Kommunikation zwischen einem Fahrzeug und stationären Komponenten am Fahrbahnrand. Hauptziele beim Einsatz des 802.11p Standards sind die Erhöhung der Verkehrssicherheit und Schaffung von zuverlässigen Notfalldiensten. Damit steigen auch die Anforderungen an solch einen Standard. Gefordert sind eine hohe Zuverlässigkeit und eine möglichst niedrige Latenz (Datenaustausch innerhalb von hundertstel Millisekunden). Dazu verwendet der Standard 802.11p den Physical Layer des 802.11a um die physikalisch-technischen Eigenschaften der Verbindung zur Verfügung zu stellen. Die Bundesnetzagentur hat in Deutschland den Frequenzbereich zwischen 5,850 GHz und 5,925 GHz für die WLAN-Übertragung in der Car-to-X - Kommunikation freigegeben.

Trotz der deutlichen Vorteile von C2x-Kommunikation kann sie nur dann zu einem Erfolg führen, wenn verhindert wird, dass Hacker sich in das System einloggen können, um Bewegungsmuster von Fahrzeugen zu erstellen, Nachrichten abzuhören oder: falsche Warnmeldungen einspeisen zu können. Um zu verhindern, dass der Fahrer geortet werden kann bzw. Bewegungsmuster bestimmter Personen erstellt werden können, hat man sich darauf geeinigt, dem Fahrzeug nur eine temporäre Identifikation zu geben. Dies bedeutet, dass sich das Fahrzeug in bestimmten Abständen eine neue Identifikation generiert, womit es nicht möglich ist, ein Fahrzeug zu verfolgen. Sichere Meldungen sollen durch eine elektronische Signatur bzw. Authentifizierung ermöglicht werden.

Aus der DE 10 2012 023498 A1 ist ein Verfahren zur selbsttätigen und/oder assistierenden Fahrzeugführung bekannt, bei welchem von einer Vielzahl von Fahrzeugen positionsbezogene Informationen über Fahrbahneigenschaften mittels Umfeldsensorik und Standortsensorik erfasst werden. Die Informationen werden mittels Fahrzeug-zu-X-Kommunikation an eine Datenbank übertragen. Die abgelegten Informationen in der Datenbank werden durch die übertragenen Informationen ständig aktualisiert und/oder ergänzt. Die abgelegten Informationen werden darin benutzt an mindestens ein Fahrzeug übertragen zu werden, welches einen den Informationen zugeordneten Fahrbahnabschnitt durchfährt. Nach Maßgabe der abgelegten Informationen wird entweder im Fahrzeug selber oder in einem der Datenbank zugeordneten Rechner entschieden, ob der Fahrbahnabschnitt von einem Fahrzeug mittels Umfeldsensorik und einer autonomen Steuereinrichtung selbsttätig und/oder assistierend durchfahrbar ist.

Aus der DE 10 2009 060358 A1 ist es bekannt ein Fahrzeug so auszustatten, dass ein Qualitätsmerkmal eines Funkkommunikationssystems hier die Qualität der Netzabdeckung positionsreferenziert und/oder zeitreferenziert an eine Datenbank übertragen wird. Auf diese Weise kann eine genauere Karte wie auch aktuellere Karte hinsichtlich der Verfügbarkeit des Funkkommunikationssystems erstellt werden, die dann allen Teilnehmern zur Verfügung gestellt werden kann.

Aus der DE 10 2010 029465 A1 ist ein Kraftfahrzeugkommunikationsmodul bekannt in dem neben Nahbereichsfunkverbindungsmodulen auch bildgebende und/oder abstandsmessende Sensoren wie Kamera oder Laser oder Radar untergebracht sind.

Aus der DE 10 2007 053 738 A1 ist eine Vorrichtung bekannt die eine Erfassungseinheit aufweist, die ein Objekt in der Umgebung eines Selbstfahrzeugs erfasst. Eine Steuereinheit empfängt Kommunikationsinformationen einer Kommunikationseinrichtung und bestimmt, ob die Kommunikationsinformation für das Objekt relevante Informationen von der Vorrichtung enthält. Die Steuereinheit überträgt detektierte Objektinformationen an ein anderes Kommunikationsgerät, wenn noch keine relevanten Informationen für das Objekt empfangen wurden. Im anderen Fall unterlässt es die Steuereinheit die detektierte Objektinformation an diese Kommunikationseinrichtung zu übertragen, wenn schon relevante Informationen für das Objekt empfangen wurden.

Aus der US 2015/0287323 A1 ist ein Verfahren zum Erzeugen einer Nachricht mit Fahrzeugbetriebsparametern bekannt. Das Verfahren umfasst das Messen von Betriebsparametern eines unbestückten Fahrzeugs unter Verwendung von Überwachungsgeräten, die an einem ausgerüsteten Fahrzeug vorhanden sind, das sich in der Nähe des unbestückten Fahrzeugs befindet. Das Erzeugen einer Nachricht, die die gemessenen Betriebsparameter des unbestückten Fahrzeugs enthält, bei dem ausgerüsteten Fahrzeug und das Übertragen der Nachricht mit den gemessenen Betriebsparametern des unbestückten Fahrzeugs von dem ausgerüsteten Fahrzeug zu den umliegenden Fahrzeugen, um die umliegenden Fahrzeuge über die Betriebsparameter des unbestückten Fahrzeugs zu informieren.

Derzeit sind folgende Mobilfunktechnologien für die Fahrzeug zu Fahrzeugkommunikation anwendbar: 3GPP-basiertes UMTS, HSPA, LTE, und die kommenden 5G Standards. Für die Fahrzeugdirektkommunikation werden nochmal erwähnt LTE-V und für die 5G Initiative D2D.

Im Bereich des autonomen / kooperativen Fahrens wird eine Technik namens "kollektiver Perzeption" entwickelt. Zur Informationsgewinnung stehen kooperativ interagierenden Automobilen nicht nur die fahrzeugeigenen Sensoren zur Verfügung sondern auch kommunizierte Information von Sensoren anderer Fahrzeuge. Der Begriff der kollektiven Perzeption entspricht also dem der kooperativen Wahrnehmung des Fahrzeugumfeldes.

Kollektive Perzeption ermöglicht es, bei Car-2-Car Kommunikation nicht mit Funktechnologie ausgestattete Teilnehmer im Funkbereich sichtbar zu machen. Dies geschieht durch ausgestattete Fahrzeuge, die per Sensorik und Funkmodul nicht ausgestattete Fahrzeuge erkennen und über diese berichten.

Während heutige Fahrzeuge ihre Information nach Durchfahren einer Situation löschen, sollen kooperativ interagierende Automobile ihr Wissen in einer kollektiven Daten- und Informationsbasis sammeln und nachfolgendem Verkehr zur Verfügung stellen.

### Erfindung

Bei der Verwirklichung der Idee der kollektiven Perzeption hat sich eine Lösung bei der jedes ausgestattetes Fahrzeug, das ein nicht-ausgestattetes Fahrzeug im Beobachtungsbereich erkennt, einen Bericht über das nicht-ausgestattete Fahrzeug an die anderen Verkehrsteilnehmer sendet als nachteilhaft erwiesen: Zum Einen steigt damit die Anzahl der Berichte über ein nicht-ausgestattetes Fahrzeug je nach Verkehrsdichte drastisch an, was im Fall von Übertragungen im Mobilfunknetz das Mobilfunknetz in der Mobilfunkzelle stärker auslastet, so dass weniger Kapazität für andere Dienste zur Verfügung steht. Auch bei der WLAN Lösung gilt dies im Prinzip und es steht weniger Kapazität für andere Datenübertragungen zur Verfügung. Zum anderen steigt der Aufwand zur Auswertung aller Berichte über nicht-ausgestattete Fahrzeuge bei den einzelnen Verkehrsteilnehmern oder im Zentralrechner, und es besteht die Gefahr von Verwechselungen und sich widersprechenden Berichten.

Es ist daher Aufgabe der Erfindung zur Verwirklichung der Idee der kollektiven Perzeption einen anderen Ansatz zu finden bei dem die erwähnten Nachteile vermieden werden. Die Erfindung befasst sich daher mit der Problemstellung der effizienten Kanalbenutzung bei der Umsetzung der Idee der kollektiven Perzeption für das kooperative / autonome Fahren.

Diese Aufgabe wird durch ein Verfahren zur Ermittlung von kollektiver Umfeld-Information für das kooperative und/oder autonome Fahren gemäß Anspruch 1, sowie ein Fahrzeug zur Verwendung bei dem Verfahren gemäß Anspruch 4 gelöst.

Die abhängigen Ansprüche beinhalten vorteilhafte Weiterbildungen und Verbesserungen der Erfindung entsprechend der nachfolgenden Beschreibung dieser Maßnahmen.

Um kollektive Perzeption spektral effizient zu betreiben, wird folgende Lösung vorgeschlagen:
Das mit Kommunikationsmodul ausgestattete Fahrzeug, das als erstes über ein nicht mit Kommunikationsmodul ausgestattetes Fahrzeug berichtet, sendet den Bericht an die weiteren sich im betreffenden Gebiet bewegenden oder befindenden Fahrzeuge. Der Eingang dieses Berichtes bei den weiteren Fahrzeugen führt dazu, dass die weiteren Fahrzeuge eine Bestätigung an das berichtende Fahrzeug zurücksenden mit der Bedeutung, dass sie es dann selbst unterlassen einen eigenen Bericht über das nicht ausgestattete Fahrzeug zu senden, wenn sie dieses Fahrzeug selbst mit ihren Beobachtungsmitteln erkannt haben. Mit der Bestätigungsnachricht zeigen sie an, dass sie mit dem Bericht über das nicht ausgestattete Fahrzeug zufrieden sind. Eine vorteilhafte erfindungsgemäße Maßnahme besteht darin, dass das berichtende Fahrzeug welches das nicht-ausgestattete Fahrzeug zuerst erkennt, also von dem es bisher keinen Bericht von einem anderen Fahrzeug erhalten hat, dem nicht-ausgestatteten Fahrzeug eine eindeutige Identifikation zuordnet und diese Identifikation dem Bericht hinzufügt. Die eindeutige Identifikation des nicht-ausgestatteten Fahrzeuges ist wichtig damit Verwechselungen und sich widersprechende Berichte über ein und dasselbe nicht-ausgestattete Fahrzeug vermieden werden.

Dadurch verringert sich die Zahl der über das Netz zu übertragenden Berichte über ein nicht-ausgestattetes Fahrzeug und es verringert sich dadurch die Netzauslastung, so dass mehr Übertragungskapazität für andere Datenübertragungen zur Verfügung steht. Gleichzeitig verringert sich der Aufwand für die Auswertung der Berichte über ein nicht-ausgestattetes Fahrzeug bei den weiteren Fahrzeugen im betreffenden Gebiet oder bei einem Zentralrechner, wenn die Berichte im Zentralrechner ausgewertet werden.

Weiterhin vorteilhaft für das Verfahren ist, wenn die weiteren Fahrzeuge, in der Bestätigung, die zu dem berichtenden Fahrzeug zurückgesendet wird, die eindeutige Identifikation des nicht-ausgestatteten Fahrzeugs zusammen mit einem Hash-Wert des empfangenen Berichtes in der Bestätigung zu dem berichtenden Fahrzeug zurücksenden. So erhält das berichtende Fahrzeug die Möglichkeit mit Hilfe des Hash-Wertes zu erkennen ob der Bericht unverfälscht bei dem weiteren Fahrzeug angekommen ist. Außerdem besteht der Hash-Wert aus deutlich weniger Daten als der eigentliche Bericht.

Eine vorteilhafte erfindungsgemäße Maßnahme besteht noch darin, dass das berichtende Fahrzeug eine Abmeldebotschaft an die anderen Fahrzeuge und/oder den Zentralrechner sendet, wenn es das betreffende Gebiet verlässt. Sodann wird ein Fahrzeug, das das nicht ausgestattete Fahrzeug seinerseits erkennt, die Berichterstattung über das nicht ausgestattete Fahrzeug fortführen, wobei es vorzugsweise die zuvor vergebene eindeutige Identifikation des nicht ausgestatteten Fahrzeuges weiternutzt. Auf diese Weise wird die Berichterstattung über das nicht-ausgestattete Fahrzeug schnell fortgeführt, wenn das berichtende Fahrzeug das betreffende Gebiet verlässt. Die weiteren Fahrzeuge erhalten ja die Abmeldebotschaft und können sich darauf einstellen, dass sie auf ein nicht-ausgestattetes Fahrzeug treffen werden. Sie können die früheren Berichte verwenden um das nicht-ausgestattete Fahrzeug zu lokalisieren.

Eine sehr vorteilhafte Maßnahme besteht noch darin, wenn die eindeutige Identifikation zumindest von der beobachteten Position des nicht-ausgestatteten Fahrzeuges abgeleitet wird. So ist es dann für die weiteren Fahrzeuge möglich gezielt nach dem nicht-ausgestatteten Fahrzeug Ausschau zu halten um die Berichterstattung über das Fahrzeug schneller fortführen zu können. Da die Berichte über nicht-ausgestattete Fahrzeuge so gehalten werden können, dass sie keine Rückschlüsse auf den Fahrzeughalter erlauben, sprich es wird nicht das Kennzeichen als Identifikation genutzt, dürfte diese Maßnahme weniger problematisch hinsichtlich des Datenschutzes sein.

Für ein berichtendes Fahrzeug, zur Verwendung bei dem erfindungsgemäßen Verfahren ist es vorteilhaft, dass es mit Rechenmitteln, einem Kommunikationsmodul und mit Umfeldbeobachtungsmitteln ausgestattet ist, wobei die Rechenmittel einen Bericht über ein nicht mit Kommunikationsmodul ausgestattetes Fahrzeug erstellen, wenn die Umfeldbeobachtungsmittel das nicht ausgestattete Fahrzeug in einem betreffenden Gebiet erkannt haben. Dabei sind die Rechenmittel so ausgelegt, dass sie dem nicht-ausgestatteten Fahrzeug eine eindeutige Identifikation zuordnen und diese Identifikation dem Bericht hinzufügen. Das Kommunikationsmodul wird vorzugsweise so ausgelegt, dass es den Bericht an die weiteren sich im betreffenden Gebiet bewegenden oder befindenden Fahrzeuge und/oder an einen zentralen Server sendet. Das Kommunikationsmodul wird so ausgelegt, dass es vor der weiteren Berichterstattung über das nicht ausgestattete Fahrzeug die Bestätigung von mindestens einem weiteren Fahrzeug abwartet, das den Bericht erhalten hat, mit der das weitere Fahrzeug anzeigt, dass es selbst unterlassen wird einen eigenen Bericht über das nicht ausgestattete zu senden. Dadurch wird sichergestellt, dass die Berichte nicht vergeblich gesendet werden, wenn kein weiteres Fahrzeug im Gebiet unterwegs ist.

Des Weiteren sind auch die folgenden Maßnahmen für das berichtende Fahrzeug vorteilhaft.

Die Rechenmittel sind so erfindungsgemäß eingerichtet, dass sie dem nicht-ausgestatteten Fahrzeug eine eindeutige Identifikation zuordnen und diese Identifikation dem Bericht hinzufügen. Das Kommunikationsmodul ist so ausgelegt eine Abmeldebotschaft an die weiteren Fahrzeuge und/oder den zentralen Server zu senden, wenn das berichtende Fahrzeug das betreffende Gebiet verlässt. Es ergeben sich die gleichen Vorteile wie oben schon in Bezug auf die entsprechenden Maßnahmen für das Verfahren erläutert.

Auch für ein weiteres Fahrzeug zur Verwendung bei dem Verfahren werden vorteilhafte Maßnahmen beansprucht. So ist es vorteilhaft, dass das weitere Fahrzeug mit Rechenmitteln, einem Kommunikationsmodul und mit Umfeld-Beobachtungsmitteln ausgestattet ist. Das Kommunikationsmodul ist dazu ausgelegt eine Bestätigungsnachricht an das berichtende Fahrzeug zurücksenden, wenn es einen Bericht über ein nicht ausgestattetes Fahrzeug erhalten hat, wobei die Bestätigungsnachricht anzeigt, dass das Kommunikationsmodul weiter dazu ausgelegt ist es in diesem Fall zu unterlassen einen eigenen Bericht über das nicht ausgestattete Fahrzeug zu senden. Wie zuvor erwähnt, verringert sich dadurch die Netzauslastung und es steht mehr Übertragungskapazität für andere Datenübertragungen zur Verfügung. Auch wird der Aufwand zur Auswertung der Berichte bei den weiteren Fahrzeugen reduziert.

Auch hier ist es von Vorteil, dass die Kommunikationsmittel ausgelegt werden in der Bestätigungsnachricht die eindeutige Identifikation zu dem nicht-ausgestatteten Fahrzeug zusammen mit einem Hash-Wert des Berichtes zu dem berichtenden Fahrzeug zurücksenden. Der Hashwert ermöglicht die Überprüfung ob der Bericht unverfälscht angekommen ist und hält auch die Bestätigungsnachricht klein.

Die Rechenmittel und das Kommunikationsmodul des weiteren Fahrzeuges sind in vorteilhafterweise erfindungsgemäße dazu ausgelegt die Berichterstattung über das nicht ausgestattete Fahrzeug fortzuführen, wenn die Umfeld-Beobachtungsmittel das nicht ausgestattete Fahrzeug erkennen, und von dem berichtenden Fahrzeug eine Abmeldenachricht erhalten wurde, wobei die Rechenmittel vorzugsweise ausgelegt sind die zuvor vergebene eindeutige Identifikation des nicht ausgestatteten Fahrzeuges für die Fortführung der Berichterstattung weiter zu benutzen.

Als Umfeld-Beobachtungsmittel können in vorteilhaft ein oder mehrere Elemente der Komponenten
- Radarsensor,
- Videokamera
- Stereokamera
- Plenoptikkamera
- Lidarsensor,
- Lasersensor,
- Ultraschallsensor und
- Neigungssensor
bei dem berichtenden Fahrzeug und/oder bei dem weiteren Fahrzeug eingesetzt werden.

Des Weiteren ist von Vorteil, wenn das Fahrzeug ein Positionsbestimmungsmittel aufweist, mit dem die Position des nicht-ausgestatteten Fahrzeugs in örtlicher und/oder zeitlicher Richtung bestimmt oder geschätzt wird. Dies ist von Bedeutung, wenn die Identifikation für das nicht-ausgestattete Fahrzeug die Position des nicht-ausgestatteten Fahrzeuges angeben soll oder von der Position zumindest abgeleitet werden soll.

Das Positionsbestimmungsmittel kann vorzugsweise in Form des oft schon im Fahrzeug installierten Fahrzeugnavigationssystems realisiert werden. So ist es dann für die weiteren Fahrzeuge möglich gezielt nach dem nicht-ausgestatteten Fahrzeug Ausschau zu halten um die Berichterstattung über das Fahrzeug schneller fortführen zu können.

### Zeichnungen

Ein Ausführungsbeispiel der Erfindung ist in den Zeichnungen dargestellt und wird nachfolgend anhand der Figuren näher erläutert.

Es zeigen:
- Fig. 1: das Prinzip der Fahrzeugkommunikation über Mobilfunk;
- Fig. 2: das Prinzip der Fahrzeugkommunikation über ein ad hoc WLAN-Netz;
- Fig. 3: ein Blockdiagramm für die Fahrzeugelektronik eines Kraftfahrzeuges; und
- Fig. 4: die zeitliche Abfolge der Datenübertragungen bei dem erfindungsgemäßen Verfahren der kollektiven Umfeld-Wahrnehmung.

### Detaillierte Beschreibung der Ausführungsbeispiele der Erfindung

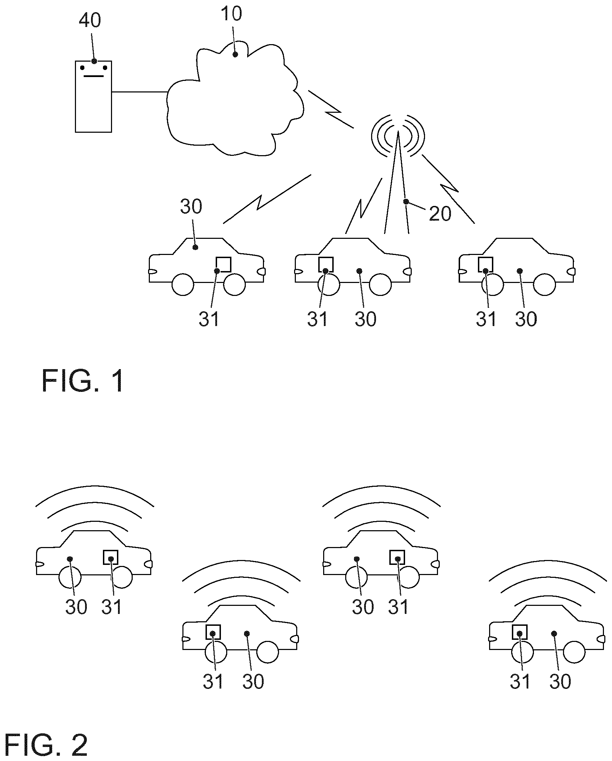

Fig. 1 zeigt das Prinzip der Fahrzeugkommunikation mittels Mobilfunk. Die Fahrzeuge sind mit Bezugszahl 30 versehen.

Der Begriff Fahrzeug versteht sich als Sammelbegriff sei es für Kraftfahrzeuge mit Brennkraftmaschine oder Elektromotor, sei es für Fahrräder oder andere mit Muskelkraft betriebene Fahrzeuge, sei es für Fahrzeuge mit einem, zwei, drei, vier oder mehr Rädern. Sei es für Motorräder, Personenkraftwagen, Lastkraftwagen, Bus, Landwirtschaftsfahrzeug oder Baumaschinen. Die Aufzählung ist nicht abschließend und umfasst auch weitere Fahrzeugkategorien.

Die Fahrzeuge in Fig. 1 sind jeweils mit einer On-Board Unit 31 ausgestattet, die als Sende- und Empfangseinheit für die Mobilkommunikation dient. Alle Nachrichten von den Fahrzeugen (Uplink) und zu den Fahrzeugen (Downlink) werden entweder über eine Basisstation 20 geleitet, die eine Mobilfunkzelle bedient oder im Fall von Fahrzeugdirektkommunikation (Sidelink) unmittelbar zwischen den Fahrzeugen ausgetauscht. Befinden sich die Fahrzeuge innerhalb dieser Mobilfunkzelle, sind sie bei der Basisstation 20 angemeldet bzw. eingebucht. Verlassen sie die Mobilfunkzelle, werden sie an die benachbarte Zelle übergeben (Handover) und dementsprechend an der Basisstation 20 abgemeldet bzw. ausgebucht. Die Basisstation 20 stellt auch einen Zugang zum Internet zur Verfügung, so dass die Fahrzeuge 30 bzw. alle anderen Mobilfunk-Teilnehmer in der Mobilfunkzelle mit Internetdaten versorgt sind. Über das Internet 10 oder ein anderes Weitverkehrsnetz WAN erreichbar ist noch ein Zentralrechner 40 vorhanden, der als Datenbank für die kollektive Umfeld-Wahrnehmung gemäß der Erfindung dient.

Diese Mobilfunk-Technologie ist standardisiert und es wird diesbezüglich auf die entsprechenden Spezifikationen von Mobilfunkstandards hingewiesen. Als ein modernes Beispiel eines Mobilfunkstandards wird auf die 3GPP Initiative und den LTE-Standard (Long Term Evolution) Bezug genommen. Viele der zugehörigen ETSI Spezifikationen liegen z.Z. in der Version 13 vor. Als Beispiel wird genannt: ETSI TS 136 213 V13.0.0 (2016-05); Evolved Universal Terrestrial Radio Access (E-UTRA); Physical layer procedures (3GPP TS 36.213 version 13.0.0 Release 13).

Fig. 2 zeigt sich entgegenkommende Fahrzeuge 30 deren On-Board Units 31 als WLAN-Kommunikationsmodule ausgebildet sind. Für die Fahrzeug-zu Fahrzeug-Kommunikation wurde der Standard IEEE 802.11p entwickelt. Die beteiligten Fahrzeuge in einem betreffenden Gebiet vernetzen sich zu einem ad hoc WLAN-Netz. Es gibt auch sogenannte Road-Side Units, die ebenfalls an dem Ad-hoc WLAN-Netz teilnehmen können. Das sind Funkbaken, die typischerweise am Straßenrand installiert werden. Man spricht auch von der sogenannten Ad-hoc Domain bestehend aus den On-Board Units 31 der Fahrzeuge 30 und den Road Side Units.

Hauptziele der Entwicklung von dem Standard IEEE 802.11p sind die Erhöhung der Verkehrssicherheit und Schaffung von zuverlässigen Notfalldiensten. Hohe Zuverlässigkeit und eine möglichst niedrige Latenz (Datenaustausch innerhalb von hundertstel Millisekunden) sind die Hauptanforderungen. Dazu verwendet die Spezifikation IEEE 802.11p den Physical Layer von IEEE 802.11a um die physikalisch-technischen Eigenschaften der Verbindung zur Verfügung zu stellen. Der freigegebene Frequenzbereich für diese Spezifikation liegt zwischen 5,850 GHz und 5,925 GHz.

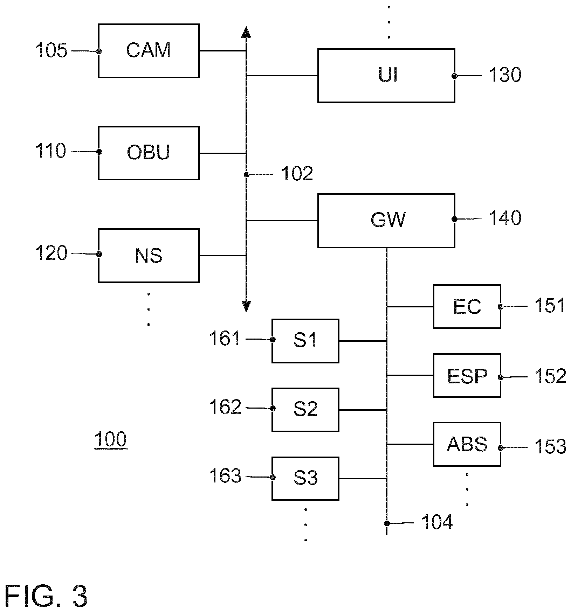

Fig. 3 zeigt den typischen Aufbau einer Kfz-Elektronik eines modernen Kraftfahrzeuges. Mit der Bezugszahl 151 ist ein Motorsteuergerät bezeichnet. Die Bezugszahl 152 entspricht einem ESP-Steuergerät und die Bezugszahl 153 bezeichnet ein ABS-Steuergerät. Weitere Steuergeräte wie Getriebesteuergerät, Airbagsteuergerät usw. können im Kraftfahrzeug vorhanden sein. Die Vernetzung solcher Steuergeräte geschieht typischerweise mit dem CAN-Bussystem (Controller Area Network) 104 welches als ISO Norm standardisiert ist, ISO 11898. Da die verschiedensten Sensoren im Kraftfahrzeug installiert werden und diese nicht mehr nur an einzelne Steuergeräte angeschlossen werden, werden solche Sensordaten ebenfalls über das Bussystem 104 zu den einzelnen Steuergeräten übertragen. Beispiele von Sensoren im Kraftfahrzeug sind Raddrehzahlsensoren, Lenkwinkelsensoren, Beschleunigungssensoren, Drehratensensoren, Reifendrucksensoren, Abstandssensoren usw. Die verschiedenen Sensoren mit dem das Fahrzeug ausgestattet ist, sind in der Figur 3 mit der Bezugszahl 161, 162, 163 bezeichnet.

Das moderne Kraftfahrzeug kann aber noch weitere Komponenten aufweisen wie Videokameras 105, z.B. als Rückfahrkamera oder als Fahrerüberwachungskamera oder auch als Frontkamera um das Verkehrsgeschehen zu beobachten. Als Beispiel weiterer Komponenten wird auch ein Radargerät für die Realisierung eines Radartempomaten oder zur Realisierung eines Abstandswarnungs- oder Kollisionswarnungsgerätes genannt.

Seit einigen Jahren werden Fahrerassistenzsysteme angeboten, welche mit Radar-, Lidar- oder Videosensorik die Fahrumgebung erfassen, sich durch Interpretation dieser Sensordaten eine interne Repräsentation der Fahrsituation bilden und aufbauend auf diesem Wissen zunehmend anspruchsvolle Funktionen durch Information und Warnung des Fahrers bis hin zu gezielten Eingriffen in die Fahrzeugführung ausführen. So kann beispielsweise die Längsführung auf gut strukturierten Straßen, wie Autobahnen, durch ein mit Radarsensorik ausgestattetes ACC System (Adaptive Cruise Control) zu einem hohen Zeitanteil automatisch ausgeführt werden.

Im Kraftfahrzeug befinden sich dann auch noch weitere elektronische Vorrichtungen. Diese sind mehr im Bereich der Fahrgastzelle angeordnet und werden oft auch von dem Fahrer bedient. Beispiele sind eine Benutzerschnittstellenvor-richtung mit dem der Fahrer Fahrmodi anwählen kann, aber auch klassische Komponenten bedienen kann. Darunter fallen Gangwahl sowie auch Blinker-Steuerung, Scheibenwischersteu-erung, Lichtsteuerung, usw. Diese Benutzerschnittstellenan-ordnung ist mit der Bezugszahl 130 versehen. Die Benutzerschnittstellenanordnung 130 ist oft auch mit einem Dreh/Druckschalter ausgestattet, über den der Fahrer die verschiedenen Menüs anwählen kann die auf einem Display im Cockpit angezeigt werden. Andererseits fällt auch ein berührungsempfindliches Display in diese Kategorie. Selbst die Spracheingabe für die Bedienungsunterstützung fällt in diesen Bereich.

Davon unterschieden wird oft ein Navigationssystem 120, welches ebenfalls im Bereich des Cockpits verbaut wird. Die Route, welche auf einer Karte angezeigt wird, kann natürlich ebenfalls auf dem Display im Cockpit dargestellt werden. Weitere Komponenten, wie eine Freisprecheinrichtung können vorhanden sein, sind aber nicht näher dargestellt. Die Bezugszahl 110 bezeichnet noch eine On-Board Unit. Diese On-Bord Unit 110 entspricht einem Kommunikationsmodul über das das Fahrzeug mobile Daten empfangen und senden kann. Wie beschrieben kann es sich hier um ein Mobilfunk-Kommunikationsmodul, z. B. nach dem LTE-V-Standard oder um ein WLAN-Modul nach der IEEE 802.11p Spezifikation handeln.

Die Geräte des Fahrgastraumes sind ebenfalls untereinander vernetzt über ein Bussystem, das mit der Bezugszahl 102 bezeichnet wird. Es kann sich z. B. um das Highspeed CAN-Bussystem nach ISO 11898-2 Standard handeln, hier allerdings in der Variante für Datenübertragung mit höherer Datenrate zwischen Infotainment-Geräten. Zu dem Zweck, das fahrzeugrelevante Sensordaten über das Kommunikationsmodul 110 zu einem anderen Fahrzeug oder zu dem Zentralrechner 40 übertragen werden sollen, ist das Gateway 140 vorgesehen. Dieses ist mit beiden verschiedenen Bussystemen 102 und 104 verbunden. Das Gateway 140 ist dazu ausgelegt die Daten, die es über den CAN-Bus 104 empfängt so umzusetzen, dass sie in das Übertragungsformat des Highspeed-CAN-Busses 102 umgesetzt werden, so dass sie in den dort spezifizierten Paketen verteilt werden können. Für die Weiterleitung dieser Daten nach extern, also zu einem anderen Kraftfahrzeug oder zu dem Zentralrechner 40 ist das Kommunikationsmodul 110 mit dazu ausgerüstet, diese Datenpakete zu empfangen und wiederum in das Übertragungsformat des entsprechend eingesetzten Kommunikationsstandards umzusetzen. Das Gateway 140 kann auch als Rechenmittel für andere Aufgaben benutzt werden.

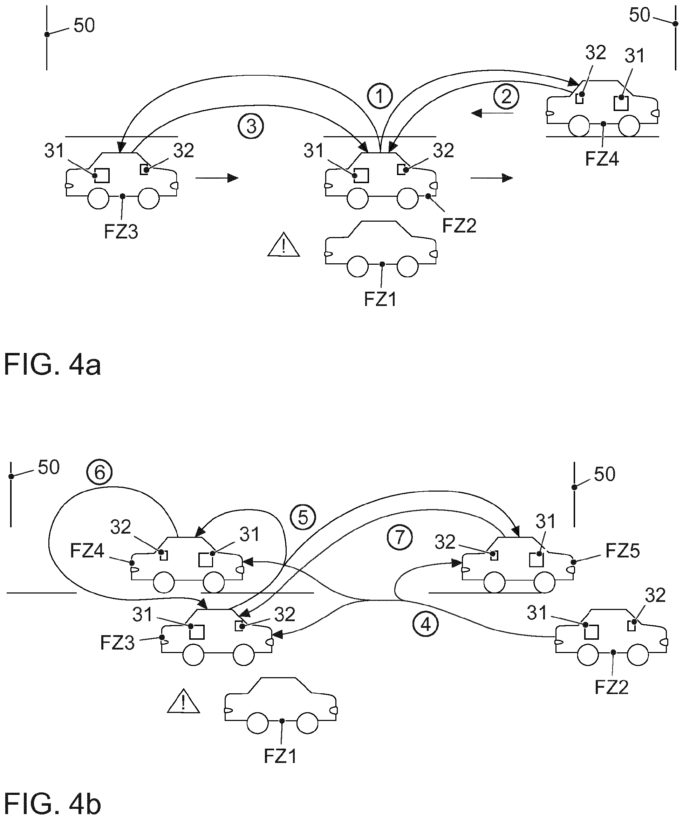

Das erfindungsgemäße Verfahren zur kollektiven Umfeld-Wahrnehmung ist in Fig. 4 illustriert. Dabei wird der Fall betrachtet, dass Fahrzeuge auf öffentlichen Straßen unterwegs sind. In Fig. 4a ist die Situation gezeigt, dass ein Fahrzeug FZ1 eine Panne hat und am Straßenrand steht. Es stellt damit ein Hindernis für den fließenden Verkehr dar. Der nachfolgende Verkehr sollte möglichst gewarnt werden vor diesem Hindernis. Dies wird durch die Funkkommunikation zwischen den Fahrzeugen ermöglicht. Dabei wird der fließende Verkehr nur in einem Gebiet um das Hindernis herum gewarnt. Dafür wird eine Straße in Abschnitte eingeteilt in denen die Funkkommunikation weitergeleitet wird. Ein Abschnitt kann typischerweise eine Länge von 200 bis 600 Meter aufweisen. Zur Einteilung der Straße in Abschnitte können in einer Variante die Road-Side Units am Straßenrand installiert werden. In Fig. 4 sind die Road-Side Units mit der Bezugszahl 50 bezeichnet. In einer anderen Variante kann die Straße einfach kartografisch in Abschnitte eingeteilt werden. Die Navigationssysteme 120 der Fahrzeuge würden also jeweils die Position des Fahrzeuges überwachen und in der Karte nachsehen in welchem Abschnitt sich das Fahrzeug befindet.

In Fig. 4a ist dargestellt dass die Fahrzeuge FZ2 und FZ3 auf der Straßenseite unterwegs sind, auf der auch das liegengebliebene Pannenfahrzeug FZ1 steht. Weiterhin ist ein entgegenkommendes Fahrzeug FZ4 dargestellt. Im Beispiel ist dargestellt, das die Fahrzeuge FZ2, FZ3, FZ4 alle mit On-Board Unit 31 und Beobachtungsmitteln 32 ausgestattet sind. Dagegen ist das Pannenfahrzeug nicht mit einer On-Board Unit ausgestattet, auch nicht mit Beobachtungsmitteln. Zuerst passiert das Fahrzeug FZ2 das Pannenfahrzeug FZ1. Da bislang noch kein Fahrzeug über das nicht ausgestattete Fahrzeug FZ1 berichtet hat, fällt diese Aufgabe dem Fahrzeug FZ2 zu, da es als Erstes Fahrzeug das Fahrzeug FZ1 erkennt.

Die erfindungsgemäße Art und Weise, wie das Fahrzeug FZ2 erkennt dass Fahrzeug FZ1 nichtausgestattet ist, besteht darin, eine Anfrage per Funk auf dem dafür vorgesehenen Anrufkanal an das Fahrzeug FZ1 zu senden. Wenn hierauf keine Antwort erfolgt, soll Fahrzeug FZ2 davon ausgehen, das Fahrzeug FZ1 nicht mit Kommunikationsmodul ausgestattet ist.

Sodann erstellt Fahrzeug FZ2 einen Bericht über Fahrzeug FZ1. Typischerweise enthält der Bericht eine oder mehrere der folgenden Informationen:
Position
Bewegungsrichtung
Bewegungsgeschwindigkeit
Länge
Breite
Höhe
Fahrzeugtyp
Unfall / Panne.

Die Aufzählung ist nicht abschließend gemeint, es können weitere oder andere Fahrzeugcharakteristiken in dem Bericht erfasst werden. Zusätzlich vergibt das Fahrzeug FZ2 eine Identifikation für das nicht-ausgestattete Fahrzeug und fügt diese Identifikation dem Bericht hinzu. Die Identifikation kann in vielerlei Form erfolgen, also zum Beispiel kann es sich um eine Identifikationsnummer, ein Identifikationswort, ein Identifikationspiktogramm oder eine andere geeignete Form zur Identifikation handeln. Hier wird insbesondere auch die Identifikation durch die Positionsangabe des Fahrzeuges erwähnt. Bei stehenden Fahrzeugen reicht die Ortsangabe als Positionsangabe. Bei sich bewegenden Fahrzeugen kann zur Ortsangabe noch die Zeitreferenz hinzukommen oder es wird eine der anderen Möglichkeiten gewählt. Die Aufzählung ist wiederum nicht abschließend gemeint.

Den Bericht sendet dann Fahrzeug FZ2 an die weiteren Fahrzeuge des betreffenden Straßenabschnitts. Dies geschieht vorzugsweise in Broadcast-Form, also wird der Bericht an alle Fahrzeuge ausgestrahlt die ihn empfangen können ohne eine einzelnen Adressierung vorzunehmen. Für solche Übertragungen steht im LTE-V-Kommunikationssystem der Sidelink-Kanal Physical Sidelink Broadcast CHannel PSBCH zur Verfügung.

Im WLAN Ad-hoc Netzwerk sind alle teilnehmenden Stationen registriert und es kann ebenfalls der Bericht an alle teilnehmenden Stationen in Broadcast- oder Multicast-Sendeart gesendet werden. Dafür werden die in IEEE 802.11p entwickelten Verfahren eingesetzt, die es ermöglichen Fahrzeuginformationen an alle Teilnehmer in der Umgebung zu senden. Diesbezüglich wird auf den 802.11p-Standard ausdrücklich Bezug genommen.

Die Ausstrahlung des Berichtes über Fahrzeug FZ1 ist in Fig. 4a durch das Bezugszeichen ① markiert. Der Bericht geht an beide Fahrzeuge im Streckenabschnitt FZ3 und FZ4. Im nächsten Schritt senden die Fahrzeuge FZ3 und FZ4 eine Bestätigungsnachricht an das berichtende Fahrzeug FZ1 zurück. Die entsprechenden Aussendungen der Bestätigungsnachricht sind mit dem Bezugszeichen ② und ③ markiert. Dies geschieht vorzugsweise in der Unicast-Sendeart also gezielt für das berichtende Fahrzeug FZ2 adressiert. Bei LTE-V steht dafür der Sidelink-Kanal Physical Sidelink Shared CHannel PSSCH zur Verfügung. Der Inhalt der Bestätigungsnachricht besteht vorzugsweise aus der Identifikation für das Fahrzeug, wie im Bericht empfangen und dem Hashwert des empfangenen Berichtes. Da ein Hashwert mittels einer Hashfunktion berechnet wird, liefert er wie bei einer Prüfsumme eine Größe mit der sich schnell ermitteln lässt, ob der empfangene Bericht tatsächlich dem gesendeten Bericht entspricht. Fehler im Bericht bzw. Fälschungen des Berichtes können so auf der Seite des berichtenden Fahrzeuges FZ2 schnell erkannt und entlarvt werden.

In der Folgezeit sendet Fahrzeug FZ2 regelmäßig einen Bericht zu Fahrzeug FZ1. Dies kann in kurzen Abständen erfolgen, z.B. im Abstand von 2s. Treten weitere Fahrzeuge in den Streckenabschnitt ein, bestätigen diese den Eingang des Berichtes ebenfalls. Jedes Fahrzeug, das den Bericht bestätigt, zeigt damit auch an, dass es mit dem Bericht zufrieden ist und es also selbst unterlässt einen eigenen Bericht zu senden.

Die Fahrzeuge FZ2 bis FZ4 bewegen sich fort und passieren das Fahrzeug FZ1. Kurze Zeit später verlassen sie den Streckenabschnitt in dem das Fahrzeug FZ1 steht.

Fig. 4b zeigt nun was hinsichtlich der Berichterstattung zu Fahrzeug FZ1 passiert. Fahrzeug FZ2 hat soeben den Streckenabschnitt in dem Fahrzeug FZ1 steht verlassen. Damit endet auch dessen Funktion als berichtendes Fahrzeug. Fahrzeug FZ2 sendet daher bei Verlassen des Streckenabschnitts eine Abmeldenachricht an die weiteren Fahrzeuge FZ3, FZ4 und FZ5 im Streckenabschnitt. Das Fahrzeug FZ5 ist in der Zwischenzeit neu in dem betreffenden Streckenabschnitt eingetroffen. Die Abmeldenachricht wird wieder in Broadcast-Form an die weiteren Fahrzeuge gesendet. Die Abmeldenachricht beinhaltet ebenfalls die Identifikation für das Fahrzeug FZ1. Der Vorgang der Absendung der Abmeldenachricht ist in Fig. 4b mit dem Bezugszeichen ④ versehen. Alle Fahrzeuge des Streckenabschnitts sind nun darüber informiert, dass keine weiteren Berichte über das Fahrzeug FZ1 ausgestrahlt werden. Deshalb wird das erste Fahrzeug, das Fahrzeug FZ1 erkennt selbst über dieses Fahrzeug berichten. Diese Rolle fällt im dargestellten Beispiel dem Fahrzeug FZ3 zu, da es das Fahrzeug FZ1 als nächstes passiert. Deshalb sendet Fahrzeug FZ3 bei ⑤ einen Bericht in Broadcast-Form an die weiteren Fahrzeuge im Streckenabschnitt. Es verwendet aber in diesem Fall die gleiche Identifikation zu Fahrzeug FZ1 in seinem eigenen Bericht, die es vorher schon in den Berichten von Fahrzeug FZ2 erhalten hat. So wird auch die Verwaltung der Berichte in den Fahrzeugen vereinfacht und es kann einfacher eine Datenbank mit den Berichten erstellt werden. Die beiden weiteren Fahrzeuge FZ4 und FZ5 senden bei ⑥ und ⑦ ihre Bestätigungsnachrichten an das berichtende Fahrzeug FZ3 wie zuvor erläutert.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein, oder ein Teil der über das Betriebssystem ausgeführt wird.

### Bezugszeichenliste

- 10: Internet
- 20: Basisstation
- 30: Fahrzeug
- 31: On-Board Unit
- 32: Beobachtungsmittel
- 40: Zentralrechner
- 50: Road-Side Unit
- 100: Blockdiagramm Fahrzeug-Elektronik
- 102: Highspeed CAN-Bus
- 105: Videokamera
- 104: CAN-Bus
- 110: On-Board Unit
- 120: Navigationssystem
- 130: Benutzerschnittstellenanordnung
- 140: Gateway
- 151: Motor-Steuergerät
- 152: ESP-Steuergerät
- 153: ABS-Steuergerät
- 161: Sensor 1
- 162: Sensor 2
- 163: Sensor 3
- FZ1: nicht-ausgestattetes Fahrzeug
- FZ2: berichtendes Fahrzeug
- FZ3: weiteres Fahrzeug
- FZ4: weiteres Fahrzeug
- FZ5: weiteres Fahrzeug
- ①: 1. Broadcast-Ausstrahlung
- ②: 1. Rückantwort
- ③: 2. Rückantwort
- ④: Abmeldenachricht
- ⑤: 2. Broadcast-Ausstrahlung
- ⑥: 3. Rückantwort
- ⑦: 4. Rückantwort

## Patentansprüche

1. Verfahren zur Ermittlung von kollektiven Umfeldinformationen, insbesondere für das kooperative und/oder autonome Fahren, bei dem
- ein berichtendes Fahrzeug (FZ2), welches mit einem Kommunikationsmodul (110) und Umfeldbeobachtungsmitteln (32) ausgestattet ist, eine Anfrage per Funk auf einem dafür vorgesehenen Anrufkanal an ein Fahrzeug (FZ1) sendet, wenn die Umfeldbeobachtungsmitteln (32) das Fahrzeug (FZ1) in einem betreffenden Gebiet erkannt haben und das Fahrzeug (FZ1) als nicht mit einem Kommunikationsmodul ausgestattetes Fahrzeug erkennt, wenn hierauf keine Antwort erfolgt;
- das berichtende Fahrzeug (FZ2) einen Bericht über das erkannte, nicht mit einem Kommunikationsmodul (110) ausgestattete Fahrzeug (FZ1) erstellt, wobei dem nicht-ausgestatteten Fahrzeug (FZ1) eine eindeutige Identifikation zuordnet wird und diese Identifikation dem Bericht hinzufügt wird, und den Bericht an weitere sich im betreffenden Gebiet befindende Fahrzeuge (FZ3, FZ4, sendet (①);
- die weiteren Fahrzeuge (FZ3, FZ4, FZ5), die den Bericht erhalten, eine Bestätigungsnachricht an das berichtende Fahrzeug (FZ2) zurücksenden (②,③) und es selbst unterlassen, einen eigenen Bericht über das nicht ausgestattete Fahrzeug (FZ1) zu senden;
- das berichtende Fahrzeug (FZ2) eine Abmeldenachricht an die weiteren Fahrzeuge (FZ3, FZ4, FZ5) sendet (④), wenn es das betreffende Gebiet verlässt; und
- ein Fahrzeug, das das nicht ausgestattete Fahrzeug (FZ1) seinerseits erkennt, und von dem berichtenden Fahrzeug (FZ2) eine Abmeldenachricht erhalten hat, die Berichterstattung über das nicht ausgestattete Fahrzeug (FZ1) fortführt (⑤), wobei es die zuvor vergebene eindeutige Identifikation des nicht ausgestatteten Fahrzeuges (FZ1) weiternutzt.

2. Verfahren nach Anspruch 1, wobei die weiteren Fahrzeuge (FZ3, FZ4, FZ5), in der Bestätigungsnachricht die eindeutige Identifikation zu dem nicht-ausgestatteten Fahrzeug (FZ1) zusammen mit einem Hash-Wert des Berichtes zu dem berichtenden Fahrzeug (FZ2) zurücksenden.

3. Verfahren nach einem der Ansprüche 1 bis 2, wobei die eindeutige Identifikation zumindest von der beobachteten Position des nicht-ausgestatteten Fahrzeuges (FZ1) abgeleitet wird.

4. Fahrzeug zur Verwendung bei dem Verfahren nach einem der Ansprüche 1 bis 3, mit Rechenmitteln (140), einem Kommunikationsmodul (110) und Umfeldbeobachtungsmitteln (32), wobei
- das Fahrzeug ausgelegt ist, eine Anfrage per Funk auf einem dafür vorgesehenen Anrufkanal an ein mit dem Umfeldbeobachtungsmittel (32) in einem betreffenden Gebiet erkanntes Fahrzeug (FZ1) zu senden und das erkannte Fahrzeug (FZ1) als nicht mit einem Kommunikationsmodul ausgestattetes Fahrzeug erkannt wird, wenn auf die Anfrage keine Antwort erfolgt, und
wobei die Rechenmitteln (140) ausgelegt sind, einen Bericht über das nicht mit einem Kommunikationsmodul (110) ausgestattete Fahrzeug (FZ1) zu erstellen, wobei dem nicht-ausgestatteten Fahrzeug (FZ1) eine eindeutige Identifikation zugeordnet und diese Identifikation dem Bericht hinzufügt wird;
- das Kommunikationsmodul (110) ausgelegt ist, einen solchen Bericht von weiteren sich im betreffenden Gebiet befindenden Fahrzeugen (FZ3, FZ4, FZ5), welche mit Kommunikationsmodulen (110) und Umfeldbeobachtungsmitteln (32) ausgestattet sind, zu empfangen und daraufhin eine Bestätigungsnachricht an das berichtende Fahrzeug (FZ2) zurückzusenden (②,③) und es zu unterlassen, einen eigenen Bericht über das nicht ausgestattete Fahrzeug (FZ1) zu senden, und den erstellten Bericht an weitere sich im betreffenden Gebiet befindende Fahrzeuge (FZ3, FZ4, FZ5) zu senden (①), wenn das Kommunikationsmodul einen solchen Bericht von weiteren sich im betreffenden Gebiet befindenden Fahrzeugen (FZ3, FZ4, FZ5), welche mit Kommunikationsmodulen (110) und Umfeldbeobachtungsmitteln (32) ausgestattet sind, nicht empfangen hat,
eine Abmeldenachricht an die weiteren Fahrzeuge (FZ3, FZ4, FZ5) zu senden (④), wenn das berichtende Fahrzeug (FZ2) das betreffende Gebiet verlässt, und
- die Rechenmittel (140) und das Kommunikationsmodul (110) dazu ausgelegt sind die Berichterstattung über das nicht ausgestattete Fahrzeug (FZ1) fortzuführen (⑤), wenn die Umfeld-Beobachtungsmittel (32) das nicht ausgestattete Fahrzeug (FZ1) erkennen, und von dem berichtenden Fahrzeug (FZ2) eine Abmeldenachricht erhalten wurde, wobei die Rechenmittel (140) ausgelegt sind die zuvor vergebene eindeutige Identifikation des nicht ausgestatteten Fahrzeuges (FZ1) für die Fortführung der Berichterstattung weiter zu benutzen.

5. Fahrzeug nach Anspruch 4, wobei das Kommunikationsmodul (110) dazu ausgelegt ist, in der Bestätigungsnachricht die eindeutige Identifikation zu dem nicht-ausgestatteten Fahrzeug (FZ1) zusammen mit einem Hash-Wert des Berichtes zu dem berichtenden Fahrzeug (FZ2) zurücksenden.

6. Fahrzeug nach einem der Ansprüche 4 oder 5, wobei die Umfeldbeobachtungsmittel (32) mindestens ein Element der Komponenten
- Radarsensor,
- Videokamera
- Stereokamera
- Plenoptikkamera
- Lidarsensor,
- Lasersensor,
- Ultraschallsensor und
- Neigungssensor
umfassen.

7. Fahrzeug nach einem der Ansprüche 4 bis 6, wobei das Kommunikationsmodul (110) zur Fahrzeugdirektkommunikation in dem LTE-V-Mobilfunksystem (Long Term Evolution Vehicle) oder in dem Mobilfunksystem 5G oder zur Fahrzeugdirektkommunikation nach dem WLAN-Standard IEEE 802.11p ausgelegt ist.

8. Fahrzeug nach einem der Ansprüche 4 bis 7, weiter aufweisend ein Positionsbestimmungsmittel, mit dem die Position des nicht-ausgestatteten Fahrzeugs in örtlicher und/oder zeitlicher Richtung bestimmt oder geschätzt wird.

9. Fahrzeug nach Anspruch 8, wobei das Positionsbestimmungsmittel ein Fahrzeugnavigationssystem (120) betrifft.

## Claims

1. Method for determining collective environment information, in particular for cooperative and/or autonomous driving, in which
- a reporting vehicle (FZ2), which is equipped with a communication module (110) and environment observation means (32), sends a request to a vehicle (FZ1) by radio on a call channel provided therefor if the environment observation means (32) have detected the vehicle (FZ1) in a relevant area, and identifies the vehicle (FZ1) as a vehicle not equipped with a communication module if there is no response thereto;
- the reporting vehicle (FZ2) produces a report about the detected vehicle (FZ1) not equipped with a communication module (110), the unequipped vehicle (FZ1) being assigned a unique identification and this identification being added to the report, and sends the report to other vehicles (FZ3, FZ4) situated in the relevant area (①);
- the other vehicles (FZ3, FZ4, FZ5) that receive the report return an acknowledgement message to the reporting vehicle (FZ2) (②③) and do not themselves send a report of their own about the unequipped vehicle (FZ1);
- the reporting vehicle (FZ2) sends a deregistration message to the other vehicles (FZ3, FZ4, FZ5) (④) when it leaves the relevant area; and
- a vehicle that itself detects the unequipped vehicle (FZ1) and has received a deregistration message from the reporting vehicle (FZ2) continues the reporting about the unequipped vehicle (FZ1) (⑤), continuing to use the previously allocated unique identification of the unequipped vehicle (FZ1) .

2. Method according to Claim 1, wherein the other vehicles (FZ3, FZ4, FZ5) use the acknowledgement message to return the unique identification relating to the unequipped vehicle (FZ1) together with a hash value of the report to the reporting vehicle (FZ2).

3. Method according to either of Claims 1 and 2, wherein the unique identification is derived from at least the observed position of the unequipped vehicle (FZ1).

4. Vehicle for use in the method according to one of Claims 1 to 3, having computing means (140), a communication module (110) and environment observation means (32), wherein
- the vehicle is designed to send a request to a vehicle (FZ1) detected in a relevant area by the environment observation means (32) by radio on a call channel provided therefor, and the detected vehicle (FZ1) is identified as not equipped with a communication module if there is no response to the request, and
wherein the computing means (140) are designed to produce a report about the vehicle (FZ1) not equipped with a communication module (110), the unequipped vehicle (FZ1) being assigned a unique identification and this identification being added to the report;
- the communication module (110) is designed to receive such a report from other vehicles (FZ3, FZ4, FZ5) situated in the relevant area that are equipped with communication modules (110) and environment observation means (32), and then to return an acknowledgement message to the reporting vehicle (FZ2) (@@) and not to send a report of its own about the unequipped vehicle (FZ1), and to send the report produced to other vehicles (FZ3, FZ4, FZ5) situated in the relevant area (①) if the communication module has not received such a report from other vehicles (FZ3, FZ4, FZ5) situated in the relevant area that are equipped with communication modules (110) and environment observation means (32), to send a deregistration message to the other vehicles (FZ3, FZ4, FZ5) (④) when the reporting vehicle (FZ2) leaves the relevant area, and
- the computing means (140) and the communication module (110) are designed to continue the reporting about the unequipped vehicle (FZ1) (⑤) if the environment observation means (32) detect the unequipped vehicle (FZ1) and a deregistration message has been received from the reporting vehicle (FZ2), the computing means (140) being designed to continue to use the previously allocated unique identification of the unequipped vehicle (FZ1) in order to continue the reporting.

5. Vehicle according to Claim 4, wherein the communication module (110) is designed to use the acknowledgement message to return the unique identification relating to the unequipped vehicle (FZ1) together with a hash value of the report to the reporting vehicle (FZ2).

6. Vehicle according to either of Claims 4 and 5, wherein the environment observation means (32) comprise at least one element from the components
- radar sensor,
- video camera,
- stereo camera,
- plenoptic camera,
- lidar sensor,
- laser sensor,
- ultrasonic sensor and
- inclination sensor.

7. Vehicle according to one of Claims 4 to 6, wherein the communication module (110) is designed for vehicle direct communication in the LTE-V (Long Term Evolution Vehicle) mobile radio system or in the 5G mobile radio system or for vehicle direct communication according to the WLAN standard IEEE 802.11p.

8. Vehicle according to one of Claims 4 to 7, further comprising a position determination means that is used to determine or estimate the position of the unequipped vehicle in the spatial and/or temporal direction.

9. Vehicle according to Claim 8, wherein the position determination means relates to a vehicle navigation system (120).

## Revendications

1. Procédé de détermination d'informations d'environnement collectives, en particulier pour la conduite coopérative et/ou autonome, dans lequel
- un véhicule rapporteur (FZ2), équipé d'un module de communication (110) et de moyens d'observation de l'environnement (32), envoie une requête par radio à un véhicule (FZ1) sur un canal d'appel prévu à cet effet lorsque les moyens d'observation de l'environnement (32) ont reconnu le véhicule (FZ1) dans une zone concernée, et reconnaît le véhicule (FZ1) comme n'étant pas équipé d'un module de communication lorsqu'aucune réponse n'est reçue ;
- le véhicule rapporteur (FZ2) établit un rapport concernant le véhicule reconnu (FZ1) non équipé d'un module de communication (110), une identification unique étant associée au véhicule non équipé (FZ1) et cette identification étant ajoutée au rapport, et envoie (①) le rapport à d'autres véhicules (FZ3, FZ4, FZ5) se trouvant dans la zone concernée ;
- les autres véhicules (FZ3, FZ4, FZ5) qui reçoivent le rapport renvoient (②, ③) un message de confirmation au véhicule rapporteur (FZ2) et s'abstiennent eux-mêmes d'envoyer leur propre rapport concernant le véhicule non équipé (FZ1) ;
- le véhicule rapporteur (FZ2) envoie (④) un message de déconnexion aux autres véhicules (FZ3, FZ4, FZ5) lorsqu'il quitte la zone concernée ; et
- un véhicule qui reconnaît à son tour le véhicule non équipé (FZ1) et qui a reçu un message de déconnexion en provenance du véhicule rapporteur (FZ2), poursuit (⑤) l'établissement du rapport concernant le véhicule non équipé (FZ1), et continue d'utiliser l'identification unique précédemment attribuée au véhicule non équipé (FZ1) .

2. Procédé selon la revendication 1, dans lequel les autres véhicules (FZ3, FZ4, FZ5) renvoient au véhicule rapporteur (FZ2), dans le message d'accusé de réception, l'identification unique du véhicule non équipé (FZ1) en même temps qu'une valeur de hachage du rapport.

3. Procédé selon l'une quelconque des revendications 1 à 2, dans lequel l'identification unique est déduite au moins de la position observée du véhicule non équipé (FZ1) .

4. Véhicule destiné à être utilisé dans le procédé selon l'une quelconque des revendications 1 à 3, comportant des moyens de calcul (140), un module de communication (110) et des moyens d'observation de l'environnement (32), dans lequel
- le véhicule est conçu pour envoyer une requête par radio sur un canal d'appel prévu à cet effet à un véhicule (FZ1) reconnu par le moyen d'observation de l'environnement (32) dans une zone concernée, et le véhicule reconnu (FZ1) est reconnu comme n'étant pas équipé d'un module de communication lorsqu'aucune réponse n'est reçue, et dans lequel les moyens de calcul (140) sont conçus pour établir un rapport concernant le véhicule (FZ1) non équipé d'un module de communication (110), une identification unique étant associée au véhicule non équipé (FZ1) et cette identification étant ajoutée au rapport ;
- le module de communication (110) est conçu pour recevoir un tel rapport en provenance d'autres véhicules (FZ3, FZ4, FZ5) se trouvant dans la zone concernée et équipés de modules de communication (110) et de moyens d'observation de l'environnement (32), pour renvoyer ensuite (②, ③) un message de confirmation au véhicule rapporteur (FZ2) et s'abstenir d'envoyer son propre rapport concernant le véhicule non équipé (FZ1), et pour envoyer (①) le rapport établi à d'autres véhicules (FZ3, FZ4, FZ5) se trouvant dans la zone concernée lorsque le module de communication n'a pas reçu un tel rapport en provenance d'autres véhicules (FZ3, FZ4, FZ5) se trouvant dans la zone concernée et équipés de modules de communication (110) et de moyens d'observation de l'environnement (32), pour envoyer (④) un message de déconnexion aux autres véhicules (FZ3, FZ4, FZ5) lorsque le véhicule rapporteur (FZ2) quitte la zone concernée, et
- les moyens de calcul (140) et le module de communication (110) sont conçus pour poursuivre (⑤) l'établissement du rapport concernant le véhicule non équipé (FZ1) lorsque les moyens d'observation de l'environnement (32) reconnaissent le véhicule non équipé (FZ1) et qu'un message de déconnexion a été reçu en provenance du véhicule rapporteur (FZ2), les moyens de calcul (140) étant conçus pour continuer d'utiliser l'identification unique précédemment attribuée au véhicule non équipé (FZ1) pour poursuivre l'établissement du rapport.

5. Véhicule selon la revendication 4, dans lequel le module de communication (110) est conçu pour renvoyer au véhicule rapporteur (FZ2), dans le message d'accusé de réception, l'identification unique du véhicule non équipé (FZ1) en même temps qu'une valeur de hachage du rapport.

6. Véhicule selon l'une quelconque des revendications 4 ou 5, dans lequel les moyens d'observation de l'environnement (32) comprennent au moins l'un des composants suivants
- capteur radar,
- caméra vidéo
- caméra stéréoscopique
- caméra plénoptique
- capteur lidar,
- capteur laser,
- capteur à ultrasons et
- capteur d'inclinaison.

7. Véhicule selon l'une quelconque des revendications 4 à 6, dans lequel le module de communication (110) est conçu pour permettre une communication directe avec le véhicule dans le système radio mobile LTE-V (Long Term Evolution Vehicle) ou dans le système radio mobile 5G ou pour permettre une communication directe avec le véhicule selon la norme WLAN IEEE 802.11p.

8. Véhicule selon l'une quelconque des revendications 4 à 7, comportant en outre un moyen de détermination de position permettant de déterminer ou d'estimer la position du véhicule non équipé dans le domaine spatial et/ou temporel.

9. Véhicule selon la revendication 8, dans lequel le moyen de détermination de position est un système de navigation de véhicule (120).
